# EUROPÄISCHE PATENTANMELDUNG

(11) **EP 1 640 105 A1**
(43) Veröffentlichungstag der Anmeldung: **29.03.2006**
(21) Anmeldenummer: 04023019.5
(22) Anmeldetag: 28.09.2004
(51) Int. Cl.: B23K 26/06, B23K 26/067, B23K 26/32, C21D 9/50

(54) **Verfahren zum Laserschweissen**

(71) Anmelder: TRUMPF Werkzeugmaschinen GmbH + Co. KG, 71254 Ditzingen (DE)
(72) Erfinder: Wessner, Michael, 72513 Gerlingen (DE); Harrer, Thomas, Dr., 71111 Waldenbuch (DE)
(74) Vertreter: Kohler Schmid Möbus

(57) **Zusammenfassung**

Bei einem Verfahren zum Laserschweißen von Bauteilen (17, 18) aus kohlenstoffhaltigem Stahl wird mithilfe eines ersten Laserstrahls (19) eine Schweißnaht (20) erzeugt. Ein zweiter Laserstrahl (21) ist zum Nachfahren der Schweißnaht (20) für eine Wärmebehandlung der Schweißnaht (20) vorgesehen. Es wurde ein wirtschaftliches Verfahren zum Laserschweißen kohlenstoffhaltiger Stähle geschaffen, bei dem eine hohe Qualität der Schweißnaht (20) gewährleistet ist.

## Beschreibung

Die Erfindung betrifft ein Verfahren zum Laserschweißen von Bauteilen.

Ein derartiges Verfahren ist beispielsweise durch die DE 101 13 471 A1 bekannt geworden.

Hoch- und höchstfeste Stähle, wie z.B. TRIP-Stähle ("transformation induced plasticity": umwandlungsinduzierte Plastizität) oder DP-Stähle (Dualphasenstähle), werden derzeit vermehrt im Automobilbau als Karosseriewerkstoffe eingesetzt. TRIP-Stähle können entweder höhere Festigkeiten (bis 850 N/mm²) bei vergleichbarer Dehnung oder wesentlich höhere Dehnungswerte bei vergleichbaren Festigkeiten von ca. 600 N/mm² aufweisen. Probleme bereitet aber das Laserschweißen dieser Stähle, weil die Aufhärtung im Bereich der Schweißnaht nach dem Laserschweißen einen für die Umformtechnik sehr kritischen Wert erreichen kann. Aufgrund des hohen Kohlenstoffgehalts neigen diese Werkstoffe beim Laserschweißen zur Martensitbildung im Bereich der Schweißnaht. Martensit, ein nadelförmiges, sehr hartes, sprödes Gefüge, bildet sich durch rasches Abkühlen (Abschrecken). Es entsteht beim Abschrecken von Austenit mit derart hohen Abkühlgeschwindigkeiten, dass dem Kohlenstoff keine Zeit zur Diffusion aus dem Gitter bleibt. Dies führt zu Problemen beim anschließenden Umformprozess (geringe Standzeit des Umformwerkzeuges).

Durch die DE 101 13 471 A1 wird vorgeschlagen, die Temperaturverteilung und Temperaturentwicklung beim Laserscheißen mithilfe eines Laserdoppelfokus zu steuern. Die Probleme der Martensitbildung beim Laserschweißen kohlenstoffhaltiger Stähle lassen sich durch das bekannte Verfahren nicht lösen.

Für das härtereduzierte Laserschweißen von höchstfesten Stählen, wie z.B. von TRIP-Stählen, gibt es derzeit noch kein wirtschaftliches Verfahren. In der Regel werden kohlenstoffhaltige Stähle derzeit mit induktiver Vorwärmung geschweißt.

Der Erfindung liegt die Aufgabe zugrunde, ein wirtschaftliches Verfahren zum Laserschweißen kohlenstoffhaltiger Stähle zu schaffen, bei dem eine hohe Qualität der Schweißnaht gewährleistet ist.

Diese Aufgabe wird durch ein Verfahren zum Laserschweißen von Bauteilen aus kohlenstoffhaltigem Stahl mithilfe eines ersten Laserstrahls oder Laserteilstrahls gelöst, welcher eine Schweißnaht erzeugt, wobei ein zweiter Laserstrahl oder Laserteilstrahl zum Nachfahren der Schweißnaht für eine Wärmebehandlung der Schweißnaht vorgesehen ist. Während bzw. nach der Verbindungsschweißung soll mit einer entsprechenden Wärmezuführung gearbeitet werden, um den Härtewert zu reduzieren. Dadurch wird die Martensitbildung entweder weitgehend verhindert oder durch das Laserschweißen erzeugter Martensit wird unmittelbar nach seiner Bildung wieder umgewandelt.

In technischer Umsetzung der Erfindung kann der zweite Laserstrahl durch einen Diodenlaser oder einen Diodenlaserstack erzeugt werden. Die Verwendung kurzwelligen Laserlichts hat den Vorteil eines höheren Absorptionsgrads. Der eigentliche Laserschweißstrahl kann in diesem Fall ein beliebiger Laser sein. Gebräuchlich sind vor allem CO₂-Laser oder Festkörperlaser.

Zur wirtschaftlichen Umsetzung der Erfindung trägt der Einsatz eines CO₂₋Lasers für den Laserschweißstrahl bei. CO₂-Laserstrahlung verlässt den Strahlerzeuger in der Regel linear polarisiert. Diese Eigenschaft wird in der folgenden Ausführungsform der Erfindung genutzt.

Wenn eine linear polarisierte Strahlung unter dem Brewster-Winkel zur Wärmebehandlung einfällt, kann eine effektivere Wärmebehandlung stattfinden. Es ist bekannt, dass das Reflexionsvermögen eines Werkstoffs für Strahlung einer bestimmten Wellenlänge u. a. von deren Polarisation abhängt. Werden der senkrecht und der parallel in der Schwingungsebene polarisierte Anteil der Strahlung getrennt betrachtet, so zeigt sich ein deutlich unterschiedliches Reflexionsverhalten der beiden Anteile. Während der reflektierte Anteil der senkrecht linear polarisierten Strahlung (ausgehend vom Lot) beständig ansteigt, fällt er bei der parallel polarisierten Strahlung bis zu einem bestimmten Winkel (sog. Brewster-Winkel) auf Null ab. Unter diesem Winkel wird bei metallischen Werkstoffen der weitaus größte Anteil der Strahlung absorbiert (ca. 80 %). Mit weiter wachsendem Winkel gleicht sich der Reflexionsgrad dem der senkrecht linear polarisierten Strahlung an. Der Brewster-Winkel beträgt bei Eisenwerkstoffen ca. 4°.

Ausführungsbeispiele der Erfindung sind in der Zeichnung schematisch dargestellt und werden nachfolgend mit Bezug zu den Figuren der Zeichnung näher erläutert. Es zeigt im Einzelnen:
- **Fig. 1**: den Aufbau einer Laserschweißanlage;
- **Fig. 2**: das Prinzip der Nachbehandlung der Schweißnaht mithilfe eines Laserstrahls mit Strahlformung;
- **Fig. 3**: eine Möglichkeit zur Erzeugung des Laserstrahls nach Fig. 2;
- **Fig. 4**: das Prinzip der Nachbehandlung der Schweißnaht mithilfe eines Diodenlaserstacks;
- **Fig. 5**: eine isometrische Darstellung des Laserschweißkopfs in Kombination mit einem Diodenlaserstack;
- **Fig. 6a,6b**: ein Temperatur-Zeit (T(t))-Diagramm der Laserbearbeitung.

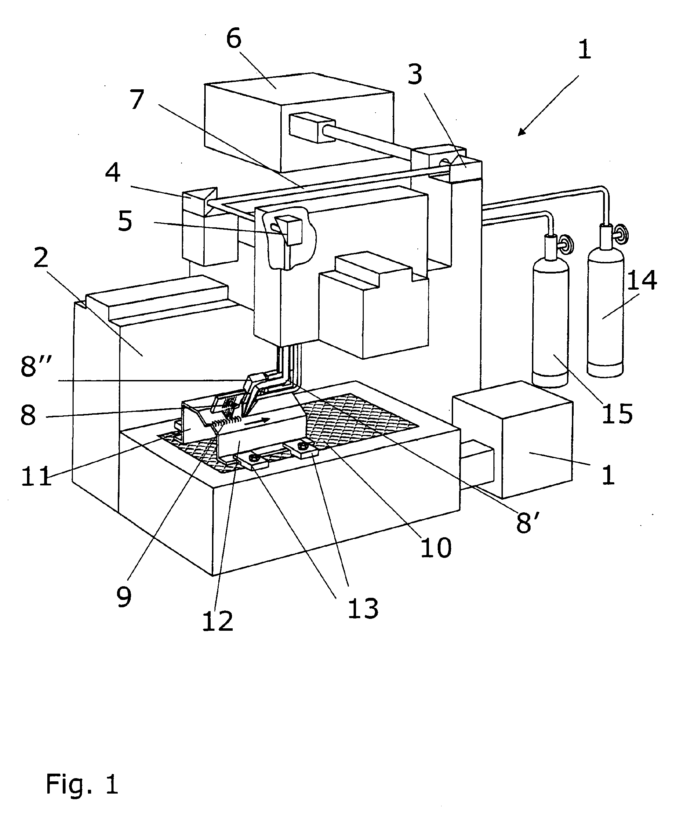

Aus der **Fig. 1** ist der Aufbau einer Laserschweißanlage **1** ersichtlich. Ein Maschinenrahmen **2** trägt die Bewegungseinheit der Maschine und das Strahlführungssystem mit Umlenkspiegeln **3** bis **5** für einen in dem Laser **6** erzeugten Laserstrahl **7.**

Ein Laserschweißkopf **8** mit einem Umlenkspiegel **8'** und einem Fokussierspiegel **8"** ist über zwei Drehachsen und in drei Richtungen bewegbar, um eine Schweißnaht **9** zum Fügen zweier auf einer Auflage **10** angeordneter Bauteile **11** und **12** optimal bearbeiten zu können. Die Bauteile 11 und 12 werden mithilfe einer Spannvorrichtung **13** fixiert. Zum Laserschweißen können dem Laserschweißkopf 8 Prozessgase (Arbeitgas **14,** Schutzgas **15)** zugeführt und über eine Absaugeinrichtung **16** abgesaugt werden.

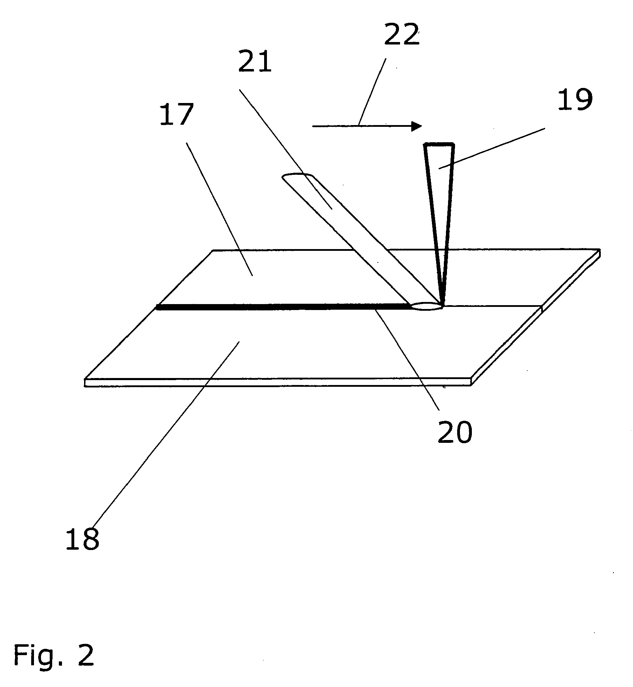

Gemäß **Fig. 2** werden zwei Bauteile **17** und **18** gleicher oder unterschiedlicher Blechdicke mithilfe eines Laserstrahls **19** eines CO₂-Lasers unter Bildung einer Schweißnaht **20** aneinander gefügt. Die Fügestellen der Bauteile 17 und 18, in der Regel Bleche, werden mit dem CO₂-Laser wie bisher gefügt. Gleichzeitig wird dem Schweiß-Laserstrahl 19 ein zweiter Laserstrahl **21** (zusätzliche Energiequelle) in Schweißrichtung **22** nachgeführt, mit dem bei der zuvor erzeugten Schweißnaht 20 ein Anlasseffekt (Umwandlung des Martensits) und somit eine Verringerung der Härte erreicht werden soll. Beim Erwärmen der Schweißnaht 20 mithilfe des zweiten Laserstrahls 21 (Anlassen) geht Martensit schließlich bei hohen Temperaturen (bis 720 °C) und entsprechenden Erwärmungszeiten in Ferrit mit eingelagertem Zementit über. Dadurch wird die Härte verringert, wodurch sich die Zähigkeit des Stahls erhöht. Die Anlasstemperatur hängt von der Stahlsorte und den geforderten Festigkeitseigenschaften ab.

Der nachgeführte Laserstrahl 21 sollte ein Laserstrahl mit relativ kurzer Wellenlänge z.B. ein Diodenlaserstrahl, ein Festkörperlaserstrahl oder ein Teilstrahl eines Festkörperlaserstrahls sein, da diese Wellenlänge auch ohne einen Tiefschweißeffekt, d.h. Schweißen ohne Metalldampfplasma bzw. ohne Keyhole, gut in den Werkstoff einkoppelt.

Der nachgeführte Laserstrahl 21 kann unterschiedlich weit vom Schweiß-Laserstrahl 19 entfernt angeordnet sein und verschiedene Strahlformen besitzen. Es kann ein entsprechend geformter Linienfokus direkt nach dem Schweißprozess oder überlappend zum Schweißprozess angeordnet sein. Bezüglich des nachgeführten Laserstrahls 21 wird vorgeschlagen, dass linear polarisierte Strahlung unter dem Brewster-Winkel einfallen soll.

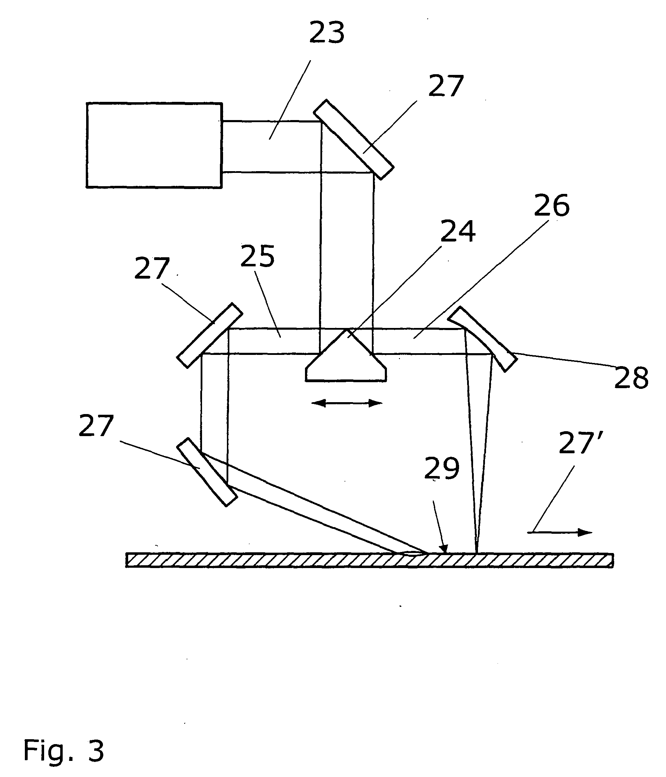

In **Fig. 3** ist gezeigt, dass ein Laserstrahl **23** mithilfe eines Prismenspiegels **24** in zwei Laserstrahlen **25** und **26** aufgeteilt und mithilfe von Umlenkspiegeln **27** und einem Fokussierspiegel **28** auf eine Schweißnaht **29** gerichtet werden kann. Der Laserstrahl 26 wird zum Schweißen (Schweißrichtung **27')** verwendet. Der Laserstrahl 25 wird zur Nachbehandlung der Schweißnaht 29 genutzt.

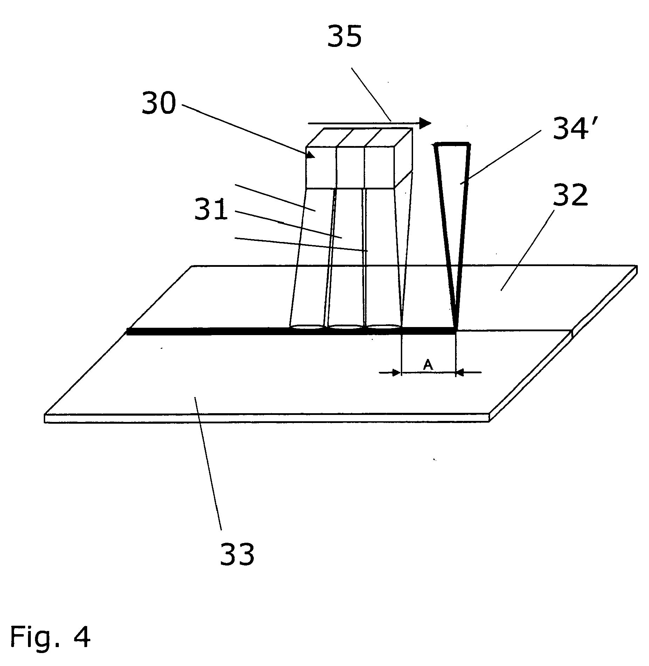

Es kann auch ein Laserdiodenstack **30** gemäß **Fig. 4** zum Einsatz kommen. Laserdioden sind hierbei hintereinander und weiter entfernt vom Schweißprozess im Abstand **A** angeordnet, um Laserstrahlen **31** zur Nachbehandlung der Schweißnaht zu erzeugen. Bauteile **32** und **33** werden an einer Schweißnaht **34** mithilfe eines Laserstrahls **34'** aneinander gefügt (Schweißrichtung **35).**

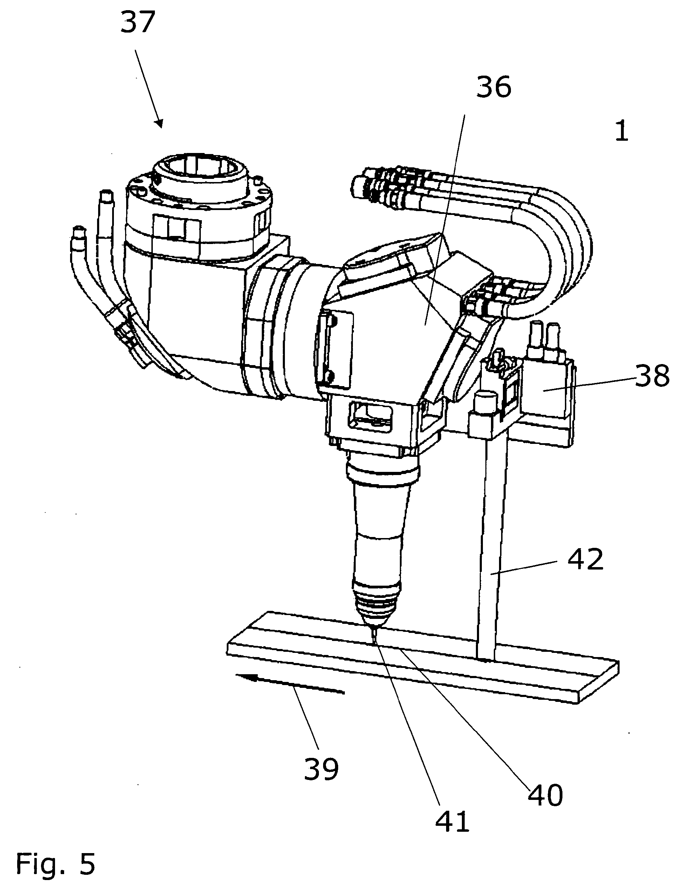

Der Diodenlaserstack ist in Kombination mit dem CO₂-Laser eine besonders wirtschaftliche und technisch einfache Lösung, wie sie beispielhaft in der **Fig. 5** dargestellt ist. Auf der Außenseite eines Gehäuses **36** eines Laserschweißkopfs **37** ist ein Laserdiodenstack **38** angeordnet. Hinter dem Laserdiodenstack 38 können beliebig viele weitere Laserdioden angeordnet sein, um die gewünschte Laserleistung zu erzielen. Der Laserschweißkopf 37 kann in Pfeilrichtung **39** bewegt werden, um eine Schweißnaht **40** mithilfe des Laserstrahls **41** zu erzeugen und mithilfe des Laserstrahls **42** nachzubehandeln.

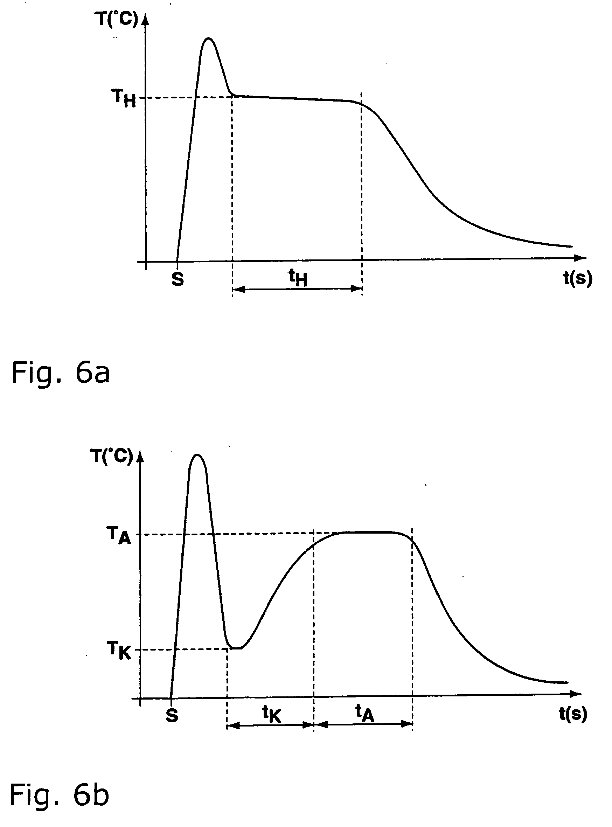

Die **Figuren 6a** und **6b** verdeutlichen den Zusammenhang zwischen den Eigenschaften eines Werkstücks und den einstellbaren Parametern. Wie die dem Schweißprozess folgende Wärmebehandlung aussehen soll, ist im Wesentlichen durch die metallurgischen Eigenschaften und die Werkstückdicke vorgegeben. Der gewünschte Temperaturverlauf im Werkstück ist hier mithilfe eines Temperatur-Zeit (T(t))-Diagramms veranschaulicht.

Fig. 6a entspricht einer Laserbearbeitung gemäß Fig. 2. Das Laserschweißen beginnt bei der Startzeit S. Nach dem Ende des Laserschweißens wird eine Temperatur **T**_{**H**} über eine Haltezeit **t**_{**H**} mithilfe des zweiten Laserstrahls konstant gehalten, bevor das Werkstück abkühlt. T_{H} und t_{H} sind abhängig vom Werkstoff und der Werkstoffdicke.

Fig. 6b entspricht einer Laserbearbeitung gemäß Fig. 4. Das Laserschweißen beginnt bei der Startzeit S. Nach dem Ende des Laserschweißens kühlt das Werkstück zunächst bis auf eine Abkühltemperatur **T**_{**K**} während einer Abkühlzeit **t**_{**K**} ab. Das Werkstück wird während einer Anlasszeit **t**_{**A**} mithilfe des zweiten Laserstrahls bis zu einer Anlasstemperatur **T**_{**A**} erwärmt, bevor das Werkstück endgültig abkühlt. T_{A} und T_{K} sowie tₖ und t_{A} sind abhängig vom Werkstoff und der Werkstoffdicke.

Der Temperaturverlauf wird über die Länge der Bearbeitungszone, den Abstand zwischen den beiden Laserstrahlen, die Bearbeitungsgeschwindigkeit und die Laserleistung definiert. Die Bearbeitungsgeschwindigkeit ist meist durch den Laserschweißprozess vorgegeben. Die Länge der Bearbeitungszone kann z.B. über die Anzahl der Diodenstacks oder durch eine entsprechende Optik eingestellt werden. Der Abstand zwischen den beiden Laserstrahlen kann mechanisch oder optisch verstellt werden. Die Laserleistung wird am Strahlerzeuger variiert.

### BEZUGSZEICHENLISTE

- **1**: Laserschweißanlage
- **2**: Maschinenrahmen
- **3**: Umlenkspiegel
- **4**: Umlenkspiegel
- **5**: Umlenkspiegel
- **6**: Laser
- **7**: Laserstrahl
- **8**: Laserschweißkopf
- **8'**: Umlenkspiegel
- **9**: Schweißnaht
- **10**: Auflage
- **11**: Bauteil
- **12**: Bauteil
- **13**: Spannvorrichtung
- **14**: Arbeitsgas
- **15**: Schutzgas
- **16**: Absaugeinrichtung
- **17**: Bauteil
- **18**: Bauteil
- **19**: Laserstrahl
- **20**: Schweißnaht
- **21**: Laserstrahl
- **22**: Schweißrichtung
- **23**: Laserstrahl
- **24**: Prismenspiegel
- **25**: Laserstrahl
- **26**: Laserstrahl
- **27**: Umlenkspiegel
- **27'**: Schweißrichtung
- **28**: Fokussierspiegel
- **29**: Schweißnaht
- **30**: Laserdiodenstack
- **31**: Laserstrahl
- **32**: Bauteil
- **33**: Bauteil
- **34**: Schweißnaht
- **34'**: Laserstrahl
- **35**: Schweißrichtung
- **36**: Gehäuse
- **37**: Laserschweißkopf
- **38**: Laserdiodenstack
- **39**: Schweißrichtung
- **40**: Schweißnaht
- **41**: Laserstrahl
- **42**: Laserstrahl
- **A**: Abstand

## Patentansprüche

1. Verfahren zum Laserschweißen von Bauteilen (11, 12; 17, 18; 32, 33) aus kohlenstoffhaltigem Stahl mithilfe eines ersten Laserstrahls oder Laserteilstrahls (7; 19; 25; 34'; 41), welcher eine Schweißnaht (9; 20; 29; 34; 40) erzeugt, **dadurch gekennzeichnet, dass** ein zweiter Laserstrahl oder Laserteilstrahl (21; 26; 31; 42) zum Nachfahren der Schweißnaht (9; 20; 29; 34; 40) für eine Wärmebehandlung der Schweißnaht (9; 20; 29; 34; 40) vorgesehen ist.

2. Verfahren nach Anspruch 1, **dadurch gekennzeichnet, dass** der zweite Laserstrahl (21) durch einen Diodenlaser erzeugt wird.

3. Verfahren nach Anspruch 1, **dadurch gekennzeichnet, dass** der zweite Laserstrahl (31; 42) durch einen Diodenlaserstack (30; 38) erzeugt wird.

4. Verfahren nach Anspruch 1, **dadurch gekennzeichnet, dass** der erste Laserstrahl (7; 19; 25; 34'; 41) durch einen CO₂-Laser erzeugt wird.

5. Verfahren nach einem der vorhergehenden Ansprüche, **dadurch gekennzeichnet, dass** eine linear polarisierte Strahlung unter dem Brewster-Winkel zur Wärmebehandlung einfällt.
